# EUROPEAN PATENT APPLICATION

(11) **EP 2 202 545 A1**
(43) Date of publication of application: **30.06.2010**
(21) Application number: 08022404.1
(22) Date of filing: 23.12.2008
(51) Int. Cl.: G02B 5/00

(54) **Beam transformation module with an axicon in a double-pass mode**

(71) Applicant: Karlsruher Institut für Technologie, 76131 Karlsruhe (DE)
(72) Inventor: Eisler, Hans-Jürgen, Dr., 76356 Weingarten (Baden) (DE); Schell, Andreas, 77855 Achern (DE); Wissert, Matthias, 76131 Karlsruhe (DE)
(74) Representative: Schiuma, Daniele Wolfgang

(57) **Abstract**

The invention relates to a beam transformation module (10) for transforming at least a portion of a light beam (400) entering the beam transformation module into a light beam (500) having a ring-form cross-sectional intensity distribution.
The beam transformation module (10;20) comprises an axicon (100), a beam separation element (310), and a deflection element (200), wherein
- the axicon (100) and the deflection element (200) are arranged in the optical path of the input light beam (400), such that at least a portion of the input light beam (400) incident on a first surface (110) of the axicon (100) passes through the axicon (100), emerges from a second surface (120) of the axicon (100), and after being deflected by the deflection element (200) towards the axicon (100), reaches the second surface (120) of the axicon (100), passes through the axicon (100) and emerges from the first surface (110) of the axicon (100), forming thereby a transformed light beam (500) having a ring-form cross-sectional intensity distribution (510), and
- the beam separation element (310) is configured to spatially separate the input (400) and the transformed light beam (500).

## Description

The invention relates to a beam transformation module for transforming at least a portion of a light beam entering the beam transformation module into a light beam having a ring-form cross-sectional intensity distribution; a respective illumination system comprising the beam transformation module and a respective method for transforming at least a portion of a light beam having a substantially circular cross-sectional intensity distribution into a light beam having a ring-form cross-sectional intensity distribution.

One conventional optical system for generation of ring-form light beams employs a ring-form aperture or diaphragm to produce or form a light beam having a ring-form intensity distribution. This is achieved by masking or blocking the central maximum in the intensity distribution of a gaussian light beam. One of the disadvantages of this method is the substantial reduction of the intensity of the produced ring-form light beam. Thus, although this method provides for an inexpensive way to transform gaussian light beams into ring-form light beams (for example for darkfield microscopy), it requires the employment of high-intensity light beams and respectively high-intensity light sources.

Another way to generate ring-form light beams is to variably change or alter the spatial intensity distribution of a gaussian light beam. To this end, liquid crystals spatial light modulators (known for example from the display technology field) may be employed. Similar to the employment of ring-form apertures, one of the disadvantages of this technology is that the central maximum of the gaussian intensity distribution of the original light beam is substantially blocked, which leads to inefficient illumination.

Still another alternative to generate ring-form light beams is the employment of diffractive optical microelements.

The use of two conjugated axicons to produce ring-form light beam has also been proposed. An axicon is an optical element, capable of imaging a point image onto a line segment, i.e. an optical element that produces a line focus, rather than a point focus. An axicon thus transforms or images a light spot into a generally ring-shaped spot. A collimated gaussian beam will be thus transformed by the axicon into a hollow cone light beam having a ring-shaped intensity distribution in a cross-sectional (or transient) plane, i.e. in plane perpendicular to the axis of the cone. Examples of an axicon are conical lenses or rotationally symmetric prisms.

The collimated beam incident on the base of the axicon is deviated toward the optical axis due to refraction. Behind an axicon two zones may be generally distinguished. The first zone, just after the axicon, is the spatial interference zone, where all refracted rays overlap and interfere, resulting in a non-diffracted Bessel beam. Beyond this zone, all deviated rays independently propagate along different directions and form a hollow cone light beam with a ring-shaped cross-sectional intensity distribution (i.e. a ring-form intensity distribution in a plane perpendicular to the axis of the cone).

The light beam formed by the axicon is generally divergent. Thus, it is necessary to employ further optical elements (for examples lenses) or groups of optical elements (for example lens groups), in order to focus or further form (for example collimate) the divergent light beam produced by the axicon. However, the employment of further optical elements to focus or form the light beam makes the whole optical system more bulky and expensive, may create alignment problems and cause additional optical errors, which reduce the quality of the produced light beam.

A further method for generating light beams with ring-form cross-sectional intensity distribution is to employ two (conjugated) axicons, arranged subsequently along an optical axis, such as proposed for example in US 2006/0146384 A1. One disadvantage of this method is that each of the two axicons introduces its own optical errors, which have to be very carefully balanced, in order to obtain light beams with the desired quality and optical properties.

An object of the present invention is to improve the efficiency and the quality of producing light beams having a ring-form cross-sectional intensity distribution.

This object is solved by a beam transformation module having the features according to claim 1, an illumination system comprising the beam transformation module having the features according to claim 14 and a method for transforming at least a portion of a light beam having a substantially circular cross-sectional intensity distribution into a light beam having a ring-form cross-sectional intensity distribution having the features according to claim 15. Preferred embodiments of the invention are subject of the dependent claims.

According to an aspect there is provided a beam transformation module for transforming at least a portion of an input light beam into a light beam having a ring-form cross-sectional intensity distribution, said beam transformation module comprising an axicon, a beam separation element, and a deflection element, wherein
- the axicon and the deflection element are arranged in the optical path of the input light beam, such that at least a portion of the input light beam incident on a first surface of the axicon passes through the axicon, emerges from a second surface of the axicon, and after being deflected by the deflection element towards the axicon, enters the second surface of the axicon, passes through the axicon and emerges from the first surface of the axicon, forming thereby a transformed light beam having a ring-form cross-sectional intensity distribution, and
- the beam separation element is configured to spatially separate the input and the transformed light beam.

The beam transformation module comprises an axicon arranged in a double pass-mode. An axicon is an optical element, capable of imaging a point image, respectively point source onto a line segment, respectively into a line. In other words an axicon is an optical element that produces a line focus, rather than a point focus. An axicon may be thus used to transform or image a light spot into a generally ring-shaped spot. An axicon may be also used to transform or convert a light beam, for example a collimated light beam incident on the axicon into a divergent, hollow cone-like light beam. An axicon may also be used to transform a gaussian beam to a Bessel beam.

The axicon may be for example a conical prism or a conical lens of optically transparent material. In one example the axicon is a conical lens. The first surface of the axicon may be a base surface and the second surface may be a conical surface. The conical surface may be a continuous conical surface, i.e. a surface resulting from rotation of a line about the axis of rotation of the axicon as in a conical lens. The conical surface may be also a segmented conical surface as in a conical prism. The conical surface may be a convex or concave conical surface. The base surface may be for example a substantially plane (or flat) surface or a conic or convex rotationally symmetric surface, for example a spherical surface. It is also possible to arrange the axicon such that the first surface is a conical surface and the second surface a base surface.

The axicon is arranged in a double-pass mode, i.e. the input light beam to be transformed passes twice through the axicon, being thereby refracted and forming a transformed light beam having a ring-form cross-sectional intensity distribution. The two passes of the light beam through the axicon are generally in opposite directions.

The axicon may configured such as to be translatable along an optical axis of the beam transformation module and/or tiltable about an axis orthogonal to the optical axis. This may for example facilitate the alignment of the optical set-up and/or the adjustment of the transformed light beam.

The input light beam entering the beam transformation module may be a light beam with a substantially circular (or elliptical) cross-sectional intensity distribution, for example a divergent/convergent or a collimated light beam. Under cross-sectional intensity distribution, it is to be understood the intensity distribution in a cross-sectional (transverse) plane, i.e. in a plane perpendicular to the direction of propagation of the light beam, respectively in a plane perpendicular to the long axis of the input light beam. A light beam having a substantially circular or elliptical cross-sectional intensity distribution means a light beam having a defined (circular or elliptical) central radiation area, for example a cylindrical or conical ray bundle. The two-dimensional intensity distribution in a cross-sectional (transverse) plane of such beam exhibits a central radiation area having a circular or elliptical form. Such two-dimensional intensity distribution may be described for example by a Gauss function having a central intensity maximum, extending in two dimensions and forming a substantially circular or elliptical intensity spot.

An input light beam having a substantially circular or elliptical cross-sectional intensity distribution may be produced for example by filtering the central maximum of a gaussian light beam, i.e. a light beam having a gaussian cross-sectional intensity distribution through a pinhole. In one example the input light beam entering the beam transformation module is a gaussian light beam, in particular a collimated gaussian light beam.

The input light beam (or at least a portion of it) is transformed after a double pass through the axicon into a transformed light beam having a ring-form cross-sectional intensity distribution. A ring-form light beam or in other words a light beam having a ring-form cross sectional intensity distribution is a light beam having a defined, substantially radiationless central area, for example a hollow cone or a hollow cylinder form light beam. The two-dimensional intensity distribution in a cross-sectional (transverse plane) of such beam exhibits a central, substantially radiationless area, encircled by a (central) ring of a given intensity (for example a circular or elliptical ring). Such ring-form intensity distribution may be described for example by Bessel functions.

According to one example, the beam transformation module may comprise a collimator, which is configured to collimate a light beam entering the beam transformation module into a collimated light beam having a predetermined or variable diameter. The light source outputting the light beam entering the beam transformation module may be any suitable light source, for example a laser. The light source may produce substantially spatially and temporary coherent light.

In order to realise the double pass of the light beam through the axicon, the beam transformation module comprises a deflection element, which is configured to deflected at least a portion of the light beam emerging after the first pass of the axicon through the second surface of the axicon towards the axicon. The deflection element may be any optical element (for example a mirror) capable of altering, respectively diverting the direction of propagation of a light beam. The deflection element may be positioned downstream of the axicon (when viewed in a direction of propagation of the light beam to be transformed, which incident on the first surface of the axicon), so that the light beam emerging from the second surface of the axicon after the first pass at least partly strikes the deflection element (i.e. is incident on the deflection element) and is at least partly deflected by the deflection element back towards the axicon, where it undergoes a second pass through the axicon. The deflection element may be configured and arranged such as to be translatable substantially along the optical axis of the beam transformation module and/or tiltable or rotatable about an axis, which is substantially orthogonal to the optical axis, in order to example to facilitate the alignment of the optical set-up and/or to adjust the transformed light beam. The deflection element may be arranged outside the interference zone, formed just after the axicon in which the refracted rays exiting the second surface of the axicon overlap and interfere with each other.

Since after undergoing a double pass through the axicon, the input light beam or the portion thereof incident on the axicon (i.e. prior the first pass through the axicon) and the transformed light beam emerging from the axicon after a double pass through it propagate in generally the same direction, a beam separation element is provided to spatially separate the two beams from each other. The spatial separation may be achieved for example by altering the direction of propagation of the transformed light beam. For example, the beam separation element may be configured such that the altered direction of propagation of the transformed light beam is orthogonal to the direction of propagation of the light beam incident on the axicon.

In order to spatially separate the input light beam (or a portion thereof), which is incident on the first surface of the axicon (i.e. the light beam to be transformed) from the transformed light beam after a double pass through the axicon, the different spatial structures of the two light beams as well as the different diameters of the cross-sectional intensity distributions of the input light beam and the transformed light beam may be exploited.

One of the advantages of a beam transformation module employing an axicon in a double-pass mode is that it is possible to efficiently and/or inexpensively transform light beams having a substantially circular (or oval) cross-sectional intensity distribution into light beams having a ring-form cross-sectional (i.e. in a plane orthogonal to the direction of propagation of the light beam) intensity distribution. Since the light beam undergoes a double pass through the same axicon the optical errors and/or deviations induced by further optical elements causing deterioration of the quality in of the produced light beam can be efficiently reduced or compensated, thereby allowing the production of high quality output light beams with ring-form cross-sectional intensity distribution.

Another advantage may be that the beam transformation module employs fewer optical elements, which facilitates the alignment, production and maintenance of the overall optical system and reduces costs. Still another advantage may be that the beam transformation module may be realised in a very compact and/or modular form, which facilitates its integration in other optical systems.

The above beam transformation module may be applied particularly to a microscopic system (for example a darkfield microscopic system, a two-photon fluorescence microscopic system, etc.), an optical coherence tomography system, optical tweezers system, an optical lithography system, an optical testing and/or measurement system, a precision alignment system, a system for laser material processing (for example laser welding, laser machining), a laser surgery optical system, an optical bar code scanner, etc. which also form part of the present invention.

The axicon and the deflection element may be configured such that the transformed light beam emerging from the second surface of the axicon is a substantially parallel light beam.

According to an aspect the beam transformation module may be configured so as to transform the input light beam (for example a collimated gaussian light beam) into a transformed light beam having a hollow cylinder, respectively hollow rod like form. To this extend, the axicon and the deflection element (for example a plane mirror) may be configured and arranged such that after undergoing a double pass, respectively double refraction through the axicon, the light beam emerging from the axicon is a substantially parallel beam with a ring-form cross-sectional intensity distribution. The present invention is, however, not limited to this case. The beam transformation module may also be configured such that the transformed light beam formed after a double pass through the axicon is for example a diverging or a converging light beam with a ring-form cross-sectional intensity distribution.

According to a further aspect, the beam separation element comprises a spatial filter element, positioned in the optical path of the input light beam, wherein the spatial filter element is configured:
- to allow at least a portion of the input light beam to pass through the spatial filter, forming thereby a light beam incident on the first surface of the axicon, and
- to reflect at least a portion of the transformed light beam emerging from the first surface of the axicon, so that the direction of propagation of the reflected transformed light beam is substantially different from the direction of propagation of the light beam incident on the first surface of the axicon.

The spatial filter element may be arranged such that the direction of propagation of the reflected transformed light beam is substantially orthogonal to the direction of propagation of the light beam incident on the first surface of the axicon (i.e. of the light beam to be transformed). This enables efficient spatial separation of the two beams.

The portion of the light beam, which has passed through the spatial filter element may be directly directed towards the beam transformation module without undergoing any further optical transformations and/or without being further deviated by additional optical elements positioned in the optical path of the optical system upstream of the beam transformation module. It is, however, also possible to position further optical elements in the optical part between the spatial filter element and the axicon. Thus the input light beam may be further transformed, for example filtered, polarised, etc. before it reaches the axicon.

The spatial filter element may comprise multiple optical components (for example a plurality of mirrors and/or beam splitters). It may be, however, advantageous to realise the spatial filter element as a single optical element.

Thus for example, the spatial filter element may comprise an aperture, formed such as to allow at least a portion of the input light beam to pass through the spatial filter element, forming thereby the light beam incident on the first surface of the axicon. The aperture may be formed for example in a substantially central position of the spatial filter element. Further, the spatial filter element may comprise (respectively may exhibit) a reflecting surface being arranged to reflect at least a portion of the transformed light beam emerging from the first surface of the axicon, so that the direction of propagation of the reflected transformed light beam is substantially different from the direction of propagation of the light beam incident on the first surface of the axicon. For example the reflecting surface of the spatial filter element may be arranged such that the direction of propagation of the reflected transformed light beam is orthogonal to the direction of propagation of the light beam incident on the first surface of the axicon.

The reflecting surface of the spatial filter element is in particular the surface facing the axicon. The other surface of the spatial filter element need not be formed as a reflecting surface.

In this example the beam separation element is realised in a compact way by a single optical element (a spatial filter element with reflecting surface), which is arranged in the optical path of the beam transformation module. The beam separation element utilises thereby the ring-form cross-sectional shape of the output light beam in order to efficiently separate the light beam incident on the axicon from the transformed light beam emerging from the axicon. In particular, whereas the non-transformed light beam is allowed to pass through the aperture provided in the spatial filter element, without changing its direction of propagation and so as to reach the first surface of the axicon, the transformed ring-form light beam after a double pass through the axicon is reflected in a direction substantially different from the direction of propagation of the non-transformed light beam.

The aperture may have any appropriate form, such as for example a circular, an oval, a pentagon or other polygon form. The diameter of the aperture may be selected or set appropriately depending on the application and the desired diameter of the output light beam. The diameter of the aperture may be for example in the mm range, typically about 1-2 mm for coherent light sources, such as lasers. It is also possible to construct a spatial filter element in which the diameter of the aperture may be varied, for example manually or automatically.

The spatial filter element may be a plane mirror (for example a plane metal mirror) provided with an aperture. The aperture may be formed for example at a substantially central position in the plane mirror). The construction of the spatial filter element is thus very simple, and the whole optical system may be made very compact and inexpensive. As the overall optical system of the beam transformation module involves fewer components, its production, alignment and maintenance may be considerably simplified.

The beam separation element may further comprise an additional reflection element positioned at least partially within the aperture provided in the spatial filter element, wherein the additional reflection element is configured such as to alter the direction of propagation of the input light beam passing through the spatial filter element.

The additional reflection element may comprise a reflecting surface, which is arranged so as reflect at least a portion of the input light. The reflecting surface of the additional reflection element may be orthogonal to the reflecting surface of the spatial filter element.

According to an aspect, in addition to the spatial filter element, the beam separation element comprises an additional reflection element positioned at least partially within the aperture provided in the spatial filter element, wherein the additional reflective element is configured such as to alter the direction of propagation of the input light beam passing through the spatial filter element. The additional reflection element may comprise a substantially planar reflecting surface. The reflecting surface of the spatial filter element and the reflecting surface of additional reflective element may be arranged such, that they are orthogonal to each other (i.e. the angle between the normal to the reflective surface of the spatial filter element and normal to the reflective surface of the additional reflection element may be 90°). In this way, while passing through the aperture provided in the spatial filter element, the direction of propagation of the input light beam is altered by the additional reflection element by 90°. The input light beam, which has passed through the aperture in the spatial filter element strikes the first surface of the axicon, undergoes a double pass through the axicon, producing thereby a transformed light beam emerging from the first surface of the axicon. After a further reflection on the reflective surface of the spatial filter element, an output light beam which propagates in the same direction as the input light beam is produced.

According to a further aspect, the beam transformation module may be configured such that the direction of propagation of the input light beam entering (or being input to) the beam transformation module is substantially parallel to the direction of propagation of the transformed light beam having a ring-form cross-sectional intensity distribution emerging from (or being outputted from) the beam transformation module.

Alternatively the beam transformation module may be configured such that the direction of propagation of the input light beam entering (or being input to) the beam transformation module is substantially orthogonal to the direction of propagation of the transformed light beam having a ring-form cross-sectional intensity distribution emerging from (or being outputted from) the beam transformation module.

A beam transformation module configured such that the direction of propagation of the input light beam is substantially orthogonal to the direction of propagation of the transformed light beam outputted from the beam transformation module may be realised for example by employing an axicon, a deflection element (in particular a mirror) and a spatial filter element realised as a single optical element (for example a mirror provided with an aperture). Thus an efficient beam transformation module, which has very few optical components may be realised.

In some applications it may be, however, advantageous, to configure the beam transformation module such that the directions of propagation of the input light beam entering the beam transformation module and the transformed light beam produced or outputted by the beam transformation module are generally the same. To this extend the beam transformation module may comprise a further optical element or groups of optical elements (for example mirrors, beam splitters, etc), configured to alter the direction of propagation of the light beam in the beam transformation module, such that the output light beam emerging from the beam transformation module propagates in substantially the same direction as the light beam input to the beam transformation module. One way to achieve this is to employ a beam separation element comprising a spatial filter element and an additional reflection element as described above.

In this case, since the both the light beam input to the beam transformation module and the transformed light beam outputted from the beam transformation module propagate in the same direction, it is possible to integrate the beam transformation module in another optical system (for example a microscope, etc.), while preserving the original optical path, respectively the optical axis of the optical system in which the beam transformation module is integrated. No further change of the optical set-up of the optical system in which the beam transformation module is integrated, is generally needed. In addition, the space along the optical axis of the optical system in which the beam transformation module is inserted, which is required for integration of a beam transformation module is determined generally by the diameter of transformed light beam having a ring-form cross-sectional intensity distribution (i.e. by the diameter of the ring of the transformed light beam). Thus, the space along the optical axis required for integration of the beam transformation module is generally very small which further facilitates, respectively simplifies the integration of the beam transformation module in other optical systems.

The beam transformation module may be formed in a compact form, as a separate "plug-in" module, which is insertable, respectively integratable in another optical system.

As described above, the deflection element may be any optical element capable of altering, respectively diverting the direction of propagation of a light beam. According to an example, the deflection element is a mirror, in particular a plane mirror. The plane mirror may be arranged and such that the transformed light beam after a double pass through the axicon is a substantially parallel beam, i.e. a hollow cylinder light beam.

According to an aspect the beam separation element, the axicon and the deflection element are arranged in this order along an optical axis of the beam transformation module when viewed in a direction of propagation of the input light beam.

The beam transformation module according may further comprise a collimator for collimating the input light beam. The collimator may be arranged along the optical axis in a direction upstream of the spatial filter, when viewed in a direction of propagation of the light beam entering the beam transformation module. The collimator may be translatable along the optical axis of the beam transformation module and/or tiltable about an axis, which is substantially orthogonal to the optical axis. The collimator may be configured, such as to collimate the input light beam entering the beam transformation module into a collimated light beam having a predetermined or variable diameter.

According to a further aspect, there is provided an illumination system comprising:
- an optical source capable of emitting a light beam;
- a beam transformation module according to an embodiment of the present invention, wherein said beam transformation module transforms at least a portion of the light beam emitted from the optical source into an output light beam having a ring-form cross-sectional intensity distribution.

The optical source may be for example an optical source emitting a substantially coherent light beam, for example a laser source. The optical source may be also a non-coherent light source.

According to still further aspect, there is provided a method for transforming at least a portion of an input light beam into a light beam having a ring-form cross-sectional intensity distribution, comprising the steps:
- directing the input light beam towards a first surface of an axicon, such that at least a portion of the light beam incident on a first surface of the axicon passes through the axicon and emerges from the second surface of the axicon;
- deflecting at least a portion of the light beam emerging from the second surface of the axicon towards the axicon, so that the deflected portion of the light beam strikes the second surface of the axicon, passes through the axicon and emerges from the first surface of the axicon, forming thereby a transformed light beam; and
- spatially separating the light beam incident on the first surface of the axicon and the transformed light beam emerging from the first surface of the axicon.

The input light beam may be coherent or non-coherent light beam having a substantially circular or elliptical cross-sectional intensity distribution. The input light beam may be a collimated light beam, a divergent or a convergent light beam.

One of the advantages of a beam transformation module employing a combination of an axicon in a double-pass mode is that it is possible to efficiently and/or inexpensively transform spatially and temporary coherent light beams with a substantially circular or oval cross-sectional light distribution (for example gaussian light beams) in light beams having a ring-form cross-sectional light distribution, for example in hollow cylinder, respectively hollow rod or tube like light beams. Furthermore, due to the double pass through the same axicon the optical errors and/or deviations of the system causing deterioration of the quality in of the produced light beam can be efficiently reduced, thereby allowing the production of high quality output light beams with ring-shaped cross-sectional intensity distribution.

Further advantage may be the possibility to reduce the number of optical elements required for beam transformation, i.e. the number of optical elements employed in the beam transformation module. This facilitates the alignment, maintenance and production of the beam transformation module and may further help to reduce optical and alignment errors and the overall cost of the beam transformation module. According to an example, the optical system for production of light beams having ring-shaped cross-section intensity distribution may be furthermore realised in a compact and modular way, which facilitates integration in other optical systems.

Still another advantage of a beam transformation module according to an example of the invention is that the diameter of the ring-form intensity distribution of output light beam depends generally only on the diameter of the aperture and is thus limited only by the employed aperture, but not (at least conceptually) by the specifically employed optical system configuration. Furthermore, it is possible to adjust, respectively set the diameter of the hollow cylinder output light beam, so as to efficiently separate the incident (i.e. the original) light beam from the output light beam.

Possible application fields of a beam transformation module and an illumination system according to an example of the invention are all optical fields, in which it is necessary or advantageous to use ring-form light beams with high numerical aperture. Some examples include optical microscopy (for example darkfield microscopy, two-photon fluorescence microscopy, etc), optical coherence tomography, optical tweezers, optical lithography, optical testing, material processing, laser surgery and in particular corneal surgery, etc.

Details of the invention as well as further features, applications and advantages are discussed in the following embodiments or examples with reference to the figures. All disclosed or shown features taken alone or in arbitrary combinations with each other can be the subject of the invention, independent of their combinations in the patent claims or their back references as well as independent of their formulation or representation in the description or in the figures.
Fig. 1 a shows schematically a beam propagation through an axicon;
Fig. 1b shows schematically the cross-sectional intensity distribution of a light beam incident on the base surface of the axicon;
Fig. 1c shows schematically the cross-sectional intensity distribution of a light beam after a single pass through the axicon;
Fig. 2 shows schematically the optical set-up of a beam transformation module according to a first example;
Fig. 3 shows schematically the optical set-up of a beam transformation module according to a second example.

In the figures same reference signs will be used to denote same or similar features.

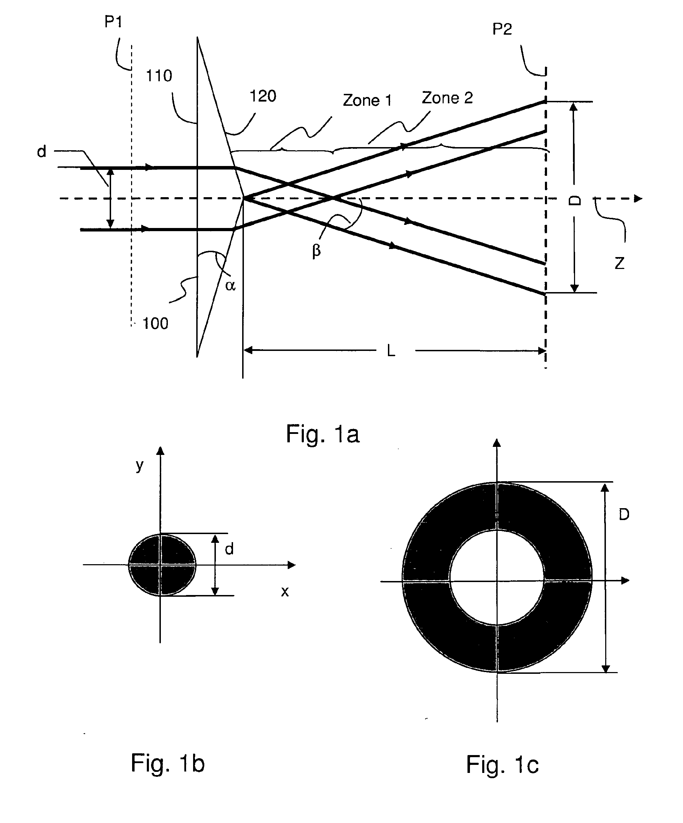

Fig. 1 a shows schematically a propagation of a collimated light beam through an axicon after a single pass through it. The axicon is an optical element that images a point source into a line focus. One example of an axicon is a conical lens or a rotationally symmetric prism of optically transparent material having a refractive index "n".

In the example shown in Fig. 1 a the axicon is a conical lens having a first, substantially plane, respectively planar base surface 110 and a second, substantially conical convex surface 120. The invention is, however, not limited to this case. The first, base surface may for example deviate from a plane surface, and be for example a concave or convex rotationally symmetric (for example a spherical) surface. It is also possible to arrange the axicon such, that the first surface is the conical surface and the second surface a plane or a rotationally symmetric concave or convex surface. The cone angle of the conical lens is equal to (180°-2α), wherein α is the tilt angle of the conical surface of the axicon. The angle α may range for example from 0,1° to 45°, more particularly from 1° to 15°. The lower limit may be in particular due to the manufacturing quality of the axicon. The upper limit may be in particular due to the matching of the aperture of the (real) optical system. Different coatings may be applied on one or both of the surfaces of the axicon.

A collimated light beam is incident on the base surface 110 of the axicon at an angle of 90° (i.e. is incident normally to the base surface 110), passes through the axicon 100, being thereby deviated at an angle β towards the optical axis Z due to refraction. Behind the axicon 100, two zones (Zone 1 and Zone 2) may be distinguished. The first zone (Zone 1), just after the axicon, is the spatial interference zone, where the refracted rays overlap and interfere resulting in a non-diffracting Bessel beam.

Beyond this zone (i.e. in the second zone "Zone 2") all deviated rays propagate independently along different directions and form a divergent light beam having a hollow cone form, exhibiting a ring-shape cross-sectional intensity distribution. The course of propagation of the deviated rays may be determined for example by applying the principles of geometrical optics and the law of refraction.

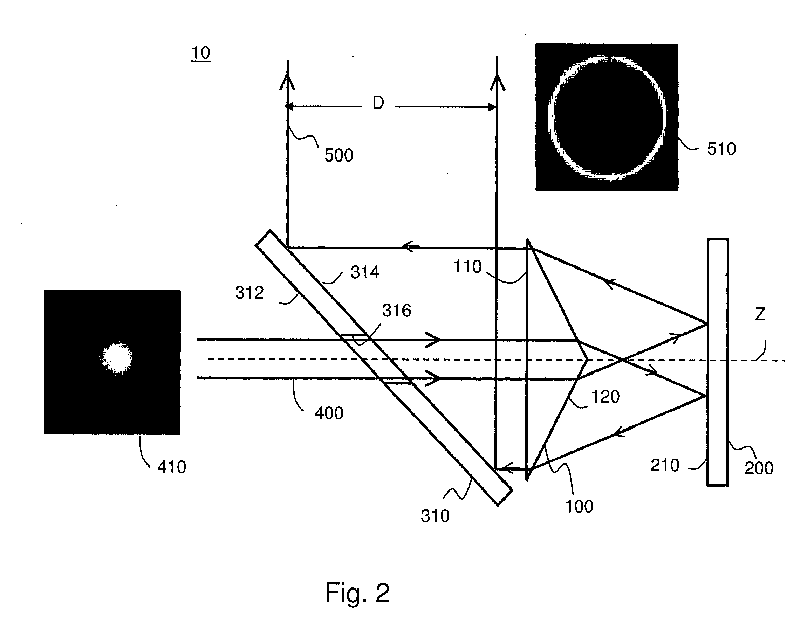

Fig. 1b shows schematically the two dimensional cross-sectional intensity distribution I(x,y) of the collimated light beam incident on the base surface 110 of the axicon 100, i.e. the intensity distribution in a plane P1, which is perpendicular to the optical axis Z. The input light beam has a diameter "d". Fig. 1c shows schematically the two-dimensional cross-sectional intensity distribution Iₜᵣ(x,y) of a light beam which has undergone a single pass through the axicon in an imaging plane P2, which is perpendicular to the optical axis and positioned at a distance L (wherein L is greater than axial length of the interference zone Z1) from the apex of the axicon. The outer diameter of the hollow cone "D", i.e. the diameter of the ring of the ring-form cross-sectional intensity distribution in the imaging plane P2, as well as the inner ring diameter may be determined by applying the principles of geometric optics and the law of refraction. It is to be noted that Fig. 1b and 1c are only schematic drawings. In practice, the intensity distribution will not exhibit sharp edges, as can be seen from Fig. 2.

Fig. 2 shows a schematic optical set-up of a beam transformation module 10 according to a first example.

The beam transformation module comprises an axicon 100, a deflection element 200 and a beam separation element, which is realised as a spatial filter element 310. The spatial filter element 310, the axicon 100 and the deflection element 200 are arranged in this order along an optical axis Z of the beam transformation module substantially in a direction of propagation of the input light beam 400.

The spatial filter element 310 in this example is realised as a substantially plane mirror, having a first (substantially plane) surface 312 and a second (substantially plane) reflecting surface 314, arranged to be opposite to the first surface and facing the axicon 100. The form of the spatial filter element 310, respectively the form of the at least one surface of the spatial filter element 310 may however deviate from the plane form.

The spatial filter element 310 is provided with an aperture or an opening 316, which is positioned substantially centrally thereof. In this example the aperture 316 has a substantially circular form. The aperture may have any appropriate form, such as for example a circular, an elliptical (oval), a pentagon or other polygon form. The diameter of the aperture 316 may be selected or set appropriately depending on the application and the desired diameter of the output light beam. The diameter of the aperture 316 may be for example substantially equal to the diameter of the light beam. The diameter of the aperture 316 may be for example in the mm range, in particular about 1-2 mm. It is also possible to construct a spatial filter element 310 in which the diameter of the aperture 330 may be varied, for example manually or automatically.

In one example the spatial filter element 310 may be a substantially plane metal mirror with an elongated round hole or opening.

The spatial filter element 310 may be arranged at an angle with respect to optical axis Z in the optical path of the input light beam 400. In Fig. 2, the spatial filter element 310 is arranged such that the angle between the optical axis Z and the normal to the (substantially plane) second reflecting surface 314 of the spatial filter element is 45°. The spatial filter element 310 may, however, be arranged such that the angle between the optical axis Z and the normal to the (substantially plane) second reflecting surface 314 of the spatial filter element is for example 135° or any other angle different from 0° or 180°.

The axicon 100 in this example is a conical lens having a first, substantially planar base surface 110 and a second, conical surface 120. The axicon 100 is arranged such, that the base surface 110 is substantially orthogonal to the optical axis Z (i.e. the normal to the base surface 110 is substantially parallel to the optical axis Z). The cone angle may be in the range of about 1° to 15°. The axicon 100 may be translatable along the optical axis Z and/or tiltable about an axis orthogonal to the optical axis Z, so as for example to facilitate the alignment of the optical set-up and/or to adjust the transformed light beam 500.

The deflection element 200 in this example is a substantially plane mirror having a reflecting surface 210 facing the axicon 100, arranged substantially orthogonal to the optical axis Z. The deflection element may be translatable along the optical axis Z and/or tiltable or rotatable about an axis orthogonal to the optical axis Z, so as to facilitates the alignment of the optical system. The deflection element 200 is arranged outside the first interference zone behind the axicon.

The beam transformation module 10 may further comprise a collimator (not shown in the figures) for collimating the light beam emerging from a light source, for example a laser light source.

The beam formation in the beam transformation module 10 according to this example will be described below in more detail:

An input light beam 400, which may be a collimated light beam with a gaussian cross-sectional intensity distribution, propagates in a direction substantially parallel to the optical axis Z, and is incident on the first surface 312 of the spatial filter element 310. At least a portion of the input light beam 400 passes through the aperture 316 provided in the spatial filter element 310, strikes the first, base surface 110 of the axicon 100 and passes through the axicon 100, being thereby refracted. The light beam emerging from the second conical surface 120 of the axicon 100 reaches the deflection element 200 and is back reflected on the reflecting surface 210 of the deflecting element 200 towards the axicon 100. The reflected light beam strikes the second, conical surface 120 of the axicon 100 and passes for a second time through the axicon 100, being thereby refracted. The transformed light beam, which emerges from the first, base surface 110 of the axicon 100 is a substantially parallel, hollow cylinder or tube like light beam with a ring-form cross-sectional intensity distribution. The transformed light beam emerging from the first, base surface 110 of the axicon 100 propagates in a direction substantially parallel to the optical axis Z and opposite the direction of propagation of the input light beam 400.

By undergoing a reflection on the second reflecting surface 314 of the spatial filter element 310, the direction of propagation the transformed light beam emerging from the axicon 100 is altered, thereby producing an output light beam 500, which is substantially separated from the incident light beam 400. The second reflecting surface 314 of the spatial filter element in this example is arranged such that the direction of propagation of the output light beam 500 is substantially perpendicular to the direction of propagation of the incident light beam 400. It is, however, also possible to arrange the spatial element 310 and in particular the second reflecting surface 316 of the spatial element 310, such that the angle between the directions of propagation of the incident and the output light beam deviates from 90°.

The beam transformation module 10 according to this example, transforms an incident collimated, spatially and temporary coherent light beam 400 exhibiting a gaussian cross-sectional intensity distribution 410 into a spatially and temporary coherent rode-like, respectively hollow-cylinder-like light beam 500 having a substantially ring-form cross-sectional intensity distribution 510.

The double pass through a single axicon enables the production of a high quality, substantially parallel output light beam with a ring-shaped cross-sectional intensity distribution (i.e. of a hollow cylinder or hollow rod like light beam) without the employment of additional optical elements or optical assemblies (such as optical lenses or lens systems) or additional conjugated axicons.

One further advantage of the above beam transformation module is that the (outer) diameter D of the ring-form cross-sectional intensity distribution of the output light beam (i.e. the diameter of the hollow cylinder, respectively hollow rod like output light beam) generally depends only on the diameter of the aperture and is thus limited only by the employed aperture, but not (at least conceptually) by the specifically employed configuration of the optical system. In addition, it is possible to adjust, respectively set the diameter of the hollow cylinder output light beam 500 (for example by adjusting the diameter of the aperture), so as to efficiently separate the input 400 light beam to the beam transformation module 10 from the output light beam 500 from the beam transformation module 10.

Further, by combining the functions of spatial filtering of the incident light beam and separating of the incident from the output light beam in a single optical element, namely in a spatial filter element, it is possible to efficiently filter and separate the incident from the output light beam, reducing at the same time the number of optical elements in the optical system. This simplifies the overall system, facilitates the production and the maintenance of the system, reduces the alignment and/or optical errors as wells as the price of the overall system.

In addition, the overall optical system of the beam transformation module may be realised in a very compact and modular form, which simplifies its integration in other optical systems which may require light beams having a ring-form cross-sectional intensity distribution.

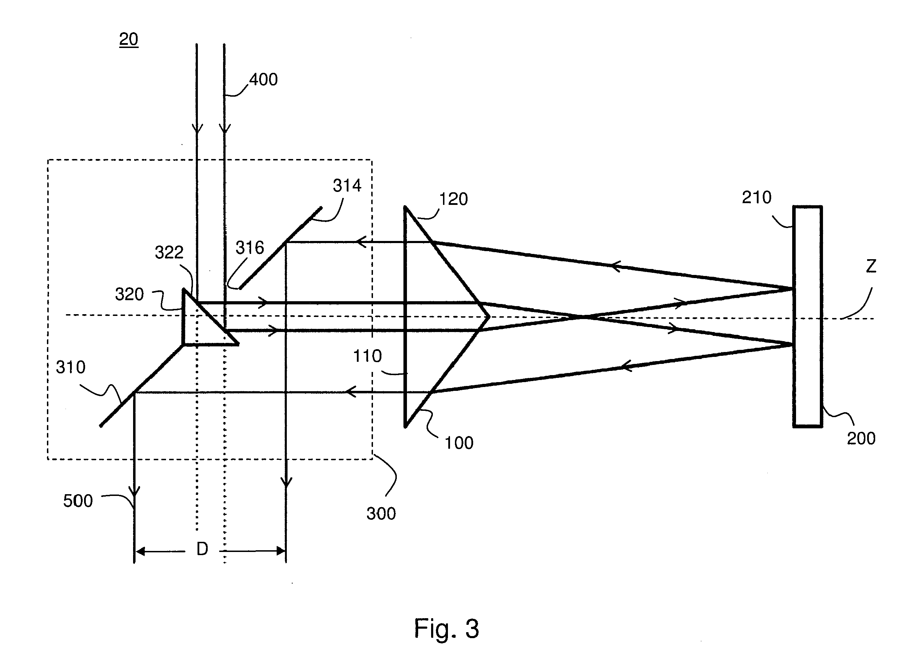

Fig. 3 shows the schematic optical set-up of a beam transformation module 20 according to a second example. Since the construction and the arrangement of the axicon 100 and the deflection element 200 of the beam transformation module according to the second example are essentially the same as in the first example, a detailed description thereof will be omitted.

The main difference between the beam transformation modules according to the first and the second example is in the configuration and the arrangement of the beam separation element. The beam separation element 300 according to the second example comprises an additional reflection element 320 in addition to a spatial filter element 310. The construction of the spatial filter element 310 is similar to the construction of the spatial filter element 300 of the beam transformation module according to the first example, so that a detailed description thereof will be omitted. In particular, the spatial filter element 310 is realised as a substantially plane mirror having a first 312 and a second 314 substantially plane surfaces, wherein the surface 314 which is facing the axicon 100 is a reflecting surface. The spatial filter element 310 is provided with an aperture or an opening 316, positioned at a substantially central position thereof. The form of the aperture 316 may vary, for example it may be substantially circular, elliptical, or any other appropriate form. The diameter of the aperture 316 may be selected or set appropriately depending on the application and the desired diameter of the output light beam 500. The diameter of the aperture 316 may be variable or fixed.

The spatial filter element 310 may be arranged at an angle with respect to the optical axis Z in the optical path of the input light beam 400. In Fig. 3, the spatial filter element 310 is arranged such that the angle between the optical axis Z and the normal to the (substantially plane) second reflecting surface 314 of spatial filter element 310 is 135°.

The beam separating element 300 comprises furthermore an additional reflection element 320, which is arranged at least partially within the aperture 316 of the spatial filter element 310. The additional reflection element 320 is arranged in the optical path of the input light beam 400 so that at least a portion of the input light beam 400 is reflected at an angle of 90°. To this extend, the reflecting surface 322 of the additional reflection element and the reflecting surface 314 of the spatial filter element are arranged at an angle of 45° to each other. The reflected at 90° input light beam, which has passed through the aperture 316 of the spatial filter element 310 reaches the first, base surface 110 of the axicon 100, passes through the axicon 100, being thereby refracted, reaches the mirror 200 and is back reflected towards to the axicon 100. After a second pass through the axicon 100, a transformed light beam having a ring-form cross-sectional intensity distribution emerges from the base surface 110 of the axicon 100 and is reflected on the reflecting surface 314 of the spatial filter element 310 at an angle of 90°. Thus, the direction of propagation of the transformed light beam 500 being output from the beam transformation module 20 substantially coincides with the direction of propagation of the input light beam 400 entering the beam transformation module 20.

Apart from the advantages listed above, the beam transformation module according to the second example does not substantially alter the course, respectively path of the original input light beam entering the beam transformation module. This greatly facilitates the integration of the beam transformation module according to the second example in other, external optical systems, since the optical axis of the optical system in which the beam transformation module is integrated is substantially preserved and no change in the optical set-up of the optical system downstream of the beam transformation module is generally needed.

In addition the space along the optical axis which is necessary to integrate the beam transformation module according to the second example is determined mainly by the diameter of the ring of the transformed light beam having a ring-form cross-sectional intensity distribution. The space needed for integration of the beam transformation module according to the second example is, thus, relatively small, which further facilitates the integration of the beam transformation module in other optical systems.

The beam transformation module according to the second example may be formed as a separate (for example prefabricated), compact optical component, which can be easily integrated in other optical systems (for example microscopes and in particular darkfield microscopes). Due to its compact and modular structure and the fact that the direction of propagation of the input light beam is not substantially altered, the beam transformation module according to the second example may be realised as a plug-in, respectively slide-in module for use in a microscope, a lithography optical system, or in any other optical system.

According to one further aspect, an illuminating system (not shown) comprising a beam transformation module according to an example of the invention may be provided. The illuminating system may comprise a light source, for example a laser, emitting spatially and temporally coherent light, a collimator for collimating the light emitted from the light source and a beam transformation module according to an example of the invention. The illuminating system may further comprise additional optic, such as for example a focusing lens or lens assembly.

Possible application fields of a beam transformation module and an illumination system according to an example of the invention are all optical fields, in which it is necessary or advantageous to use ring-form light beams with high numerical aperture. Some examples include optical microscopy (for example darkfield microscopy, two-photon fluorescence microscopy, etc), optical coherence tomography, optical tweezers, optical lithography, optical testing, material processing, laser surgery and in particular corneal surgery, etc.

Thus, for example the beam transformation module and an illuminating system according to an example of the invention may be employed to produce a hollow cylinder, respectively hollow rod like light beams with ring-form cross-sectional intensity distribution for use in reflection mode darkfield microscopy. In this case it suffices to employ only one microscopical objective lens, in order to focus the hollow cylinder or hollow rod like light beam with ring-form cross-sectional intensity distribution produced by the optical system according to the above described example. The light back-reflected by probe (or specimen) may be separated from the illuminating light, respectively from the primary excitation light by an additional spatial filter, forming thereby an image of the probe in a scattering mode. The image information of the probe may be detected by a light detector, for example a two-dimensional light detector such as a CCD camera.

### List of Reference Numerals

- 10, 20: beam transformation module
- 100: axicon
- 110: base surface of the axicon
- 120: conical surface of the axicon
- 200: deflection element
- 210: reflecting surface of the deflection element
- 300: beam separation element
- 310: spatial filter element
- 312: first surface of the spatial filter element
- 314: second reflecting surface of the spatial filter element
- 316: aperture
- 320: additional reflection element
- 322: reflecting surface of the additional reflection element
- 400: input light beam
- 410: cross-sectional intensity distribution of the input light beam
- 500: output light beam
- 510: cross-sectional intensity distribution of the output light beam
- Z: optical axis
- P1, P2: cross-sectional planes

## Claims

1. A beam transformation module (10; 20) for transforming at least a portion of an input light beam (400) into a light beam (500) having a ring-form cross-sectional intensity distribution, said beam transformation module (10; 20) comprising an axicon (100), a beam separation element (300), and a deflection element (200), wherein
- the axicon (100) and the deflection element (300) are arranged in the optical path of the input light beam (400), such that at least a portion of the input light beam (400) incident on a first surface (110) of the axicon (100) passes through the axicon (100), emerges from a second surface (120) of the axicon (100), and after being deflected by the deflection element (300) towards the axicon (300), reaches the second surface (120) of the axicon (100), passes through the axicon (100) and emerges from the first surface (110) of the axicon (100), forming thereby a transformed light beam (500) having a ring-form cross-sectional intensity distribution, and
- the beam separation element (300) is configured to spatially separate the input (400) and the transformed light beam (500).

2. A beam transformation module (10; 20) according to claim 1, wherein the axicon (100) and the deflection element (300) are configured such that the transformed light beam (500) is a substantially parallel light beam.

3. A beam transformation module (10; 20) according to claim 1 or 2, wherein the beam separation element (300) comprises a spatial filter element (310), positioned in the optical path of the input light beam (400), wherein the spatial filter element (310) is configured:
- to allow at least a portion of the input light beam (400) to pass through the spatial filter element (310), forming thereby a light beam incident on the first surface (110) of the axicon (100), and
- to reflect at least a portion of the transformed light beam (500) emerging from the first surface (110) of the axicon (100), so that the direction of propagation of the reflected transformed light beam (500) is substantially different from the direction of propagation of the light beam incident on the first surface (110) of the axicon (100).

4. A beam transformation module (10; 20) according to claim 3, wherein the direction of propagation of the reflected transformed light beam (500) is substantially orthogonal to the direction of propagation of the light beam incident on the first surface (110) of the axicon (100).

5. A beam transformation module (10; 20) according to claim 3 or 4, wherein the spatial filter element (310) comprises:
- an aperture (316), formed such as to allow at least a portion of the input light beam (400) to pass through the spatial filter element (310), forming thereby the light beam incident on the first surface (110) of the axicon (100); and
- a reflecting surface (314) being arranged to reflect at least a portion of the transformed light beam (500) emerging from the first surface (110) of the axicon (100), so that the direction of propagation of the reflected transformed light beam (500) is substantially different from the direction of propagation of the light beam incident on the first surface (110) of the axicon (100).

6. A beam transformation module (10; 20) according to any one of claims 3 to 5, wherein the spatial filter element (310) is a plane mirror provided with an aperture (316).

7. A beam transformation module (10; 20) according to claim 5 or 6, wherein the beam separation element (300) comprises further an additional reflection element (320) positioned at least partially within the aperture (316) provided in the spatial filter element (310), wherein the additional reflection element (320) is configured such as to alter the direction of propagation of the input light beam (400) passing through the spatial filter element (310).

8. A beam transformation module (10; 20) according to claim 7, wherein the additional reflection element (320) has a reflecting surface (322), which is arranged so as to reflect at least a portion of the input light beam (400), and wherein the reflecting surface (322) of the additional reflection element (320) and the reflecting surface (314) of the spatial filter element (310) are orthogonal to each other.

9. A beam transformation module (10; 20) according to any one of the preceding claims, wherein the direction of propagation of the input light beam (400) entering the beam transformation module (10; 20) is substantially parallel to the direction of propagation of the transformed light beam (500) having a ring-form cross-sectional intensity distribution emerging from the beam transformation module (10; 20).

10. A beam transformation module (10; 20) according to any one of claims 1 to 8, wherein the direction of propagation of the input light beam (400) entering the beam transformation module (10; 20) is substantially orthogonal to the direction of propagation of the transformed light beam (500) having a ring-form cross-sectional intensity distribution emerging from the beam transformation module.

11. A beam transformation module (10; 20) according to any one of the preceding claims, wherein the deflection element (200) is a mirror.

12. A beam transformation module (10; 20) according to any one of the preceding claims, wherein the beam separation element (300), the axicon (100) and the deflection element (200) are arranged along an optical axis (Z) of the beam transformation module (10; 20) in this order when viewed in a direction of propagation of the input light beam (400).

13. A beam transformation module (10; 20) according to any one of the preceding claims, comprising further a collimator for collimating the input light beam (400).

14. An illumination system comprising:
- an optical source capable of emitting a light beam;
- a beam transformation module (10; 20) according to any one of the preceding claims, wherein said beam transformation module (10; 20) transforms at least a portion of the light beam (400) into an output light beam (500) having a ring-form cross-sectional intensity distribution.

15. Method for transforming at least a portion of an input light beam into a light beam having a ring-form cross-sectional intensity distribution, comprising the steps:
- directing the input light beam towards a first surface of an axicon, such that at least a portion of the light beam incident on a first surface of the axicon passes through the axicon and emerges from the second surface of the axicon;
- deflecting at least a portion of the light beam emerging from the second surface of the axicon towards the axicon, so that the deflected portion of the light beam strikes the second surface of the axicon, passes through the axicon and emerges from the first surface of the axicon, forming thereby a transformed light beam; and
- spatially separating the light beam incident on the first surface of the axicon and the transformed light beam emerging from the first surface of the axicon.
